# EUROPÄISCHE PATENTSCHRIFT

(11) **EP 1 476 671 B1**
(45) Veröffentlichungstag und Bekanntmachung des Hinweises auf die Patenterteilung: **19.04.2006**
(21) Anmeldenummer: 03704423.7
(22) Anmeldetag: 17.01.2003
(51) Int. Cl.: F16D 65/38, F16D 55/00, F16D 65/14, F16D 65/56, F16D 65/21

(54) **SCHEIBENBREMSE MIT ELEKTRISCH ANGETRIEBENER NACHSTELLVORRICHTUNG**
DISK BRAKE COMPRISING AN ELECTRICALLY DRIVEN ADJUSTMENT DEVICE
FREIN A DISQUE EQUIPE D'UN DISPOSITIF DE REGLAGE A COMMANDE ELECTRIQUE

(30) Priorität: 13.02.2002 DE 10206078; 11.11.2002 DE 10252301
(43) Veröffentlichungstag der Anmeldung: 17.11.2004
(73) Patentinhaber: KNORR-BREMSE SYSTEME FÜR NUTZFAHRZEUGE GMBH, 80809 München (DE)
(72) Erfinder: BAUMGARTNER, Johann, 85368 Moosburg (DE); PAHLE, Wolfgang, 83707 Bad Wiessee (DE); GANZHORN, Dirk, 81543 München (DE)
(86) Internationale Anmeldenummer: PCT/EP2003/000437
(87) Internationale Veröffentlichungsnummer: WO 2003/069180

(56) Entgegenhaltungen:
- EP-A- 0 982 210
- EP-A- 0 995 921
- WO-A-97/30294
- DE-B- 1 199 552
- US-A- 4 804 073
- US-A- 6 012 556
- US-B1- 6 311 807

## Beschreibung

Die Erfindung betrifft eine Scheibenbremse nach dem Oberbegriff des Anspruches 1.

Scheibenbremsen mit elektromotorisch betätigten Nachstellsystemen sind an sich bekannt, so z.B. aus der DE 197 56 519 A1, der WO99/05428 oder der EP0995921.

Die Idee des elektrischen Nachstellmotors zum Antrieb der Nachstelleinrichtung (N) der Scheibenbremse hat sich an sich bewährt. Scheibenbremsen mit elektromechanischer Nachstellvorrichtung weisen gegenüber üblichen mechanischen Verschleißnachstellsystemen den Vorzug auf, daß ein unzulässig verkleinertes Lüftspiel (z.B. infolge thermischer Ausdehnung der Bremsbeläge) durch Zurückdrehen der Nachstelldreheinrichtungen wieder vergrößert werden kann.

Vorteilhaft können dabei im Servicefall die Nachstelldreheinrichtungen mit Hilfe der elektronischen Steuerung des Nachstellsystems zum Ersetzen der verschlissenen Bremsbeläge durch Neue selbsttätig in die Ausgangsposition zurückgestellt werden.

Mit diesem grundlegenden Vorteil der elektromechanischen Verschleißnachstellsysteme ist jedoch das Problem verbunden, auszuschließen, daß durch einen Fehler in der Hard - oder Software der Ansteuerelektronik oder durch äußere Beeinflussung derselben eine unzulässig große Rückstellung eingeleitet wird.

Obwohl durch eine entsprechend fehlertolerante Ausführung der Ansteuerelektronik und der zugehörigen Software das Auftreten dieses Fehlers als praktisch ausgeschlossen betrachtet werden kann, sind wegen der schwerwiegenden Folgen dieses Fehlers im Falle seines auch unwahrscheinlichen Auftretens zusätzliche Absicherungsmaßnahmen erforderlich.

Es ist daher die Aufgabe der Erfindung, die gattungsgemäße Scheibenbremse derart weiterzuentwickeln, dass ein unzulässig großes Zurückdrehen der Nachstelldreheinrichtungen zuverlässig verhindert wird.

Diese Aufgabe löst die Erfindung durch den Gegenstand des Anspruches 1.

Vorteilhafte Ausgestaltungen sind den Unteransprüchen zu entnehmen.

Erfindungsgemäß weist die Scheibenbremse eine mechanisch wirkende Einrichtung zum Blockieren der elektromotorisch angetriebenen Nachstellstellvorrichtungen - z.B. Nachstelldreheinrichtungen bzw. -antriebe- gegen ein einen zulässigen Grenzwert überschreitendes Vergrößern des Lüftspieles durch den elektromotorischen Antrieb auf. Damit ist es vollkommen unabhängig von Vorgängen in der Elektronik (z.B. in einem ABS oder EBS-Steuergerät der Bremse) möglich, dass im normalen Betrieb der Bremse ein Zurückdrehen z.B. der Nachstelldreheinrichtungen über einen bestimmten zulässigen Betrag hinaus durch ein mechanisches Blockieren der Nachstellvorrichtungen verhindert wird.

Diese Idee eignet sich insbesondere auch für eine Scheibenbremse, bei welcher auf beiden Seiten der Bremsscheibe jeweils wenigstens eine Nachstellvorrichtung angeordnet ist, so dass zum Ausgleich von Bremsbelagverschleiß beide Bremsbeläge auf beiden Seiten der Bremsscheibe nachstellbar sind. Dabei können die Nachstellvorrichtung(en) jeweils wenigstens eine oder zwei Nachstelldreheinrichtung(en) aufweist(en).

Bevorzugt werden die Blockierkräfte der Blockiereinrichtung zumindest so groß bemessen, daß der elektromotorische Antrieb bzw. die Antriebe der Nachstellvorrichtung die Blockierkräfte nicht überwinden können und gegen das maximale Antriebsmoment im Stillstand gehalten werden. Damit wird ein unbeabsichtigtes Vergrößern des Lüftspiels sicher vermieden.

Im Servicefall wird die Blockade der Nachstellvorrichtungen vorübergehend aufgehoben um das Zurückstellen der Spindeln zum Bremsbelagwechsel zu ermöglichen.

Die mechanische Rückdrehblockade kann an den Antriebsmotoren selbst hervorgerufen werden, im Nachstellgetriebe oder an den Nachstelldreheinrichtungen.

Die Blockade über die Nachstelldreheinrichtungen wird besonders vorteilhaft dadurch erzielt, daß die Nachstelldreheinrichtungen mit den Bremsbelägen zur Übertragung von Rückziehkräften verbunden werden und die Bremsbeläge so miteinander gekoppelt werden, daß sie zwar bei Auftreten von Verschleiß durch das Nachstellsystem aufeinander zu bewegt werden können, ein Auseinanderbewegen der Bremsbeläge jedoch nur bis zu einem vorgegebenen Betrag ermöglicht wird.

Ergänzend kann eine elektronisch wirkende Einrichtung zum Blockieren der elektromotorisch angetriebenen Nachstellstellvorrichtung(en) gegen ein unbeabsichtigtes Vergrößern des Lüftspieles durch den elektromotorischen Antrieb vorgesehen sein - z.B. als entsprechendes Steuer- und/oder Regelverfahren zum Ansteuern der Nachstellvorrichtungen ausgelegt - so daß die mechanische Blockiereinrichtung lediglich eine Rückfallsicherung für den Fall eines Ausfalls des elektronischen Blockiereinrichtung darstellt.

Die mechanische Blockiereinrichtung lässt sich unkompliziert in verschiedenster Weise realisieren.

Bevorzugt wird die mechanische Einrichtung zum Blockieren der elektromotorisch angetriebenen Nachstellvorrichtung durch eine mechanische Rückdrehblockade am elektromotorischem Antrieb, insbesondere an einem Antriebsmotor, an einem Getriebe oder an den Nachstelldreheinrichtungen realisiert. Dabei ist es insbesondere denkbar, die Rückdrehblockade an den Nachstelldreheinrichtungen ausgebildet ist.

In einer Ausführungsvariante ist auf einem Wellenende des jeweiligen Antriebsmotors ein Freilauf angeordnet der eine Drehbewegung des Antriebsmotors in zustellender Richtung der Nachstelldreheinrichtungen ermöglicht, in rückdrehender Richtung jedoch sperrt.

Um ein geringfügiges Zurückstellen der Nachstelldreheinrichtungen zu ermöglichen, ist nach einer Variante das Gehäuse des Freilaufes mit einem elastischen Element, z.B. einer Spiralfeder, verbindbar. Auf diese Weise wird bei einer Rückdrehbewegung der Motorwelle zunächst über ggf. mehrere Umdrehungen die Spiralfeder aufgezogen, bevor ein weiteres Drehen der Motorwelle durch den Freilauf und die darauf einwirkende vorgespannte Spiralfeder unterbunden wird. Das äußere Ende der Spiralfeder ist entkoppelbar mit dem Bremssattel verbunden, zum Bremsbelagwechsel kann durch einen manuellen Eingriff die Fixierung des äußeren Endes der Spiralfeder freigemacht werden, so daß ein Rückdrehen der Nachstelldreheinrichtungen ermöglicht wird.

Anstelle der Spiralfeder kann ein begrenztes Rückstellen auch mittels Kombination eines Freilaufes mit einem Schraubelement erzielt werden. Hierbei ist das Gehäuse des Freilaufes axial verschieblich aber undrehbar in einer Hülse aufgenommen, die an ihrem äußeren Durchmesser ein Außengewinde trägt, mit welchem sie mit einem Muttergewinde im Bremssattel im Eingriff steht.

Wenn der Freilauf nun bei einer Rückdrehbewegung der Motorwelle sperrt dreht er die äußere Hülse in den diese aufnehmenden Muttergewinde und bewegt sie dabei in axialer Richtung über ggf. mehrere Umdrehungen gegen einen Anschlag. Bei Erreichen des Anschlages wird die weitere Drehbewegung gestoppt.

Die beiden beschriebenen Rückdrehsicherungs-Mechanismen sowie denkbare äquivalente Ausführungsformen derselben können ebenso wie auf der Motorwelle auf jeder Welle des nachgeschalteten Nachstellgetriebes angeordnet sein. Hierbei wird entsprechend der Übersetzung zur Welle des Antriebsmotors ein geringerer Verdrehwinkel bei entsprechend größeren Verstellkräften erforderlich.

Weiter bevorzugt werden die Druckstücke mit den Belaghalteplatten verbunden.

Diese Lösung macht sich zunutze, daß die Nachstellkolben zur Erzielung eines aktiven Lüftens der Bremsbeläge nach dem Bremsvorgang mit dem jeweils beaufschlagten Bremsbelag im Sinne eines Übertragens einer Rückstellbewegung mechanisch gekoppelt sind. Diese mechanische Koppelung kann formschlüssig erfolgen (z.B. ineinandergreifende Profile von Druckelement und Bremsbelagrücken),stoffschlüssig (Kleben, Schweißen etc.) oder kraftschlüssig (z.B. über Klammerfedern).

Werden nun die beiden Bremsbeläge durch eine zweite Koppelungseinrichtung so miteinander verbunden, daß sie zwar zum Zwecke der Verschleißnachstellung aufeinander zu bewegt werden können, ein Auseinanderbewegen jedoch ab einem bestimmten vorgegebenen Betrag in der zweiten Koppelungseinrichtung unterbunden wird, so sind dadurch auch die Nachstelldreheinrichtungen sowohl der inneren als auch der äußeren Nachstellvorrichtung blockiert.

Wie bereits ausgeführt, ist eine Blockade der Spindeln über gekoppelte Bremsbeläge realisierbar. Besonders bevorzugt werden die beiden Bremsbeläge in konstruktiv einfacher und kostengünstiger Weise durch eine Kopplungseinrichtung derart miteinander gekoppelt, daß sie zum Zwecke der Verschleißnachstellung aufeinander zu, jedoch allenfalls nur um einen geringen vorbestimmten Betrag voneinander weg bewegbar sind. Auf diese Weise sind die Bremsbeläge so miteinander gekoppelt, daß sie zwar beim Auftreten von Verschleiß durch die Nachstellvorrichtung auf beiden Seiten der Bremsscheibe aufeinander zu bewegbar sind, daß ein Auseinanderbewegen der Bremsbeläge jedoch nur über einen vorgegebenen Weg möglich ist.

Die Bremsbelaghalterung besteht oftmals aus einem Belaghaltebügel der sich rechtwinklig zu den Reibflächen der Bremsscheibe über diese und die Bremsbeläge hinweg erstreckt und an beiden Enden am Bremssattel abgestützt ist. Der Belaghaltebügel drückt die beiden Bremsbeläge über die auf diese aufgesetzten Belaghaltefedern gegen die Abstützflächen in der Bremsbelagführung des Bremssattels. Daher kann die Kopplungseinrichtung an einem Belaghaltebügel ausgebildet ist, der sich rechtwinklig zu den Reibflächen der Bremsscheibe über diese und die Bremsbeläge hinweg erstreckt und an beiden Enden am Bremssattel abgestützt ist, wobei der Belaghaltebügel die beiden Bremsbeläge über die auf diese aufgesetzte Belaghaltefeder gegen Abstützflächen in der Bremsbelagführung des Bremssattels drückt. Auf diese Weise wird eine besonders sichere Blockiereinrichtung besonders kostengünstig realisiert.

Bevorzugt ist der Belaghaltbügel in Widerlagern am Bremssattel axial beweglich aufgenommen und/oder an seiner den Bremsbelägen zugewandten Fläche in den Bereichen, in welchen sich die Belaghaltefedern gegen die Belaghaltebügel abstützen, mit einer Profilierung, insbesondere mit einem Sägezahnprofil, versehen. Die Mehrkosten der Konstruktion durch die Ausbildung der Blockiereinrichtung werden auf diese Weise bei hervorragender Funktionssicherheit besonders niedrig gehalten.

Vorzugsweise weist die Profilierung zwei gegensinnig ausgerichtete Profilierungsabschnitte aufweist, so daß ein Verschieben der Bremsbeläge in Richtung der Bremsscheibe mit relativ geringer Kraft möglich ist, wohingegen ein Wegbewegen der Bremsbeläge von der Bremsscheibe durch die Profilierungen nur mit größerer Kraft möglich ist.

Bevorzugt sind an den Belaghaltefedern Vorsprünge ausgebildet sind, welche in die Profilierung eingreifen und die Belaghaltefedern sind auf den Bremsbelägen mit einem Axialspiel aufgenommen sind.

In einer weiteren Ausgestaltung der Erfindung ist der Belaghaltebügel in seinen Widerlagern am Bremssattel axial beweglich aufgenommen, z.B. mit einer axialen Verschiebbarkeit von ca. 2 mm. Auf diese Weise wird es möglich, durch gegenläufiges Ansteuern der inneren und äußeren Nachstellvorrichtungen die ganze Einheit bestehend aus Bremsbelagsatz Bremsscheibe und Belaghaltebügel in diesem Bereich hin und her zu schieben ohne daß das Gesamtlüftspiel und die Verkrallung zwischen Belaghaltebügel und Belaghaltefedern verändert werden.

Es ist auch denkbar, daß die Profilierungsabschnítte in einem zwischen Belaghaltebügel und den Belaghaltefedern angeordneten Bauteil angeordnet sind, wobei das Bauteil relativ zum Belaghaltebügel verschieblich ist.

Diese Funktion ist bei Festsattelbremsen mit äußerer Verschleißnachstellung und mikroverschiebbarer Bremsscheibe von Bedeutung.

Es sind auch Ausführungen der Erfindung denkbar, bei denen die zweite Koppelungseinrichtung separat, d.h. nicht mit der Belaghalterung kombiniert ausgeführt ist, z.B. können die Bremsbeläge über ein Zylinder - Kolbenelement gekoppelt werden wobei der oder die (zwei) Zylinder an dem ersten Bremsbelag befestigt sind und der oder die (zwei) Kolben an dem jeweils an der Bremsscheibe gegenüberliegenden Bremsbelag. Hier kann das Kolbenende mit elastischen Vorsprüngen ausgestattet sein, die in entsprechende Profilierungen z.B. umlaufende Sägezahnrillen in den Zylinderinnenflächen eingreifen.

Vorzugsweise kann mit der Zylinder - Kolbenkombination jedoch auch ein stufenlos wirkender Rückdrehsicherungsmechanismus geschaffen werden. Dies kann durch Klemmmechanismen realisiert werden, die im Prinzip ähnlich der beschriebenen mechanischen Verrastung arbeiten, vorzugsweise ist jedoch auf einem zapfenförmigen Ende des Kolbens ein Freilauf angeordnet der auf seinem ummantelnden Gehäuse ein nichtselbsthemmendes Gewinde trägt welches mit einem komplementären Muttergewinde im Zylinder in Eingriff steht. Der Freilauf ist dabei auf dem Kolbenzapfen zur Übertragung von axialen Kräften gesichert aufgenommen. Die Sperrichtung des Freilaufes ist so gewählt, daß ein aufeinander zu bewegen der Bremsbeläge mit relativ geringem Kraftaufwand möglich ist. Bei einem Auseinanderbewegen der Bremsbeläge sperrt jedoch der Freilauf, so daß im Gewinde keine Relativbewegung stattfindet. Eine geringfügige Rückwärtsbewegung wird durch ein Spiel im Gewinde oder der axialen Sicherung des Freilaufes ermöglicht.

Vorteilhafte Ausgestaltungen der Erfindung sind den Unteransprüchen zu entnehmen.

Nachfolgend wird die Erfindung unter Bezug auf die beigefügten Figuren näher erläutert. Es zeigt:
- Figur 1: einen Schnitt durch eine Scheibenbremse ohne Blockiereinrichtung;
- Figur 2: einen Schnitt durch den oberen Umfangsbereich an Elementen einer erfindungsgemäßen Scheibenbremse mit Blockiereinrichtung;

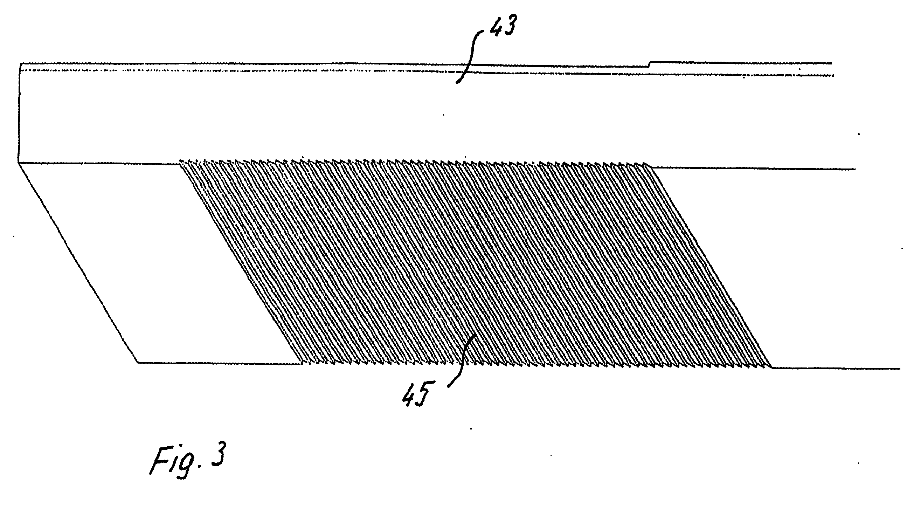

- Figur 3: eine perspektivische Ansicht eines Teils eines Belaghaltebügels;

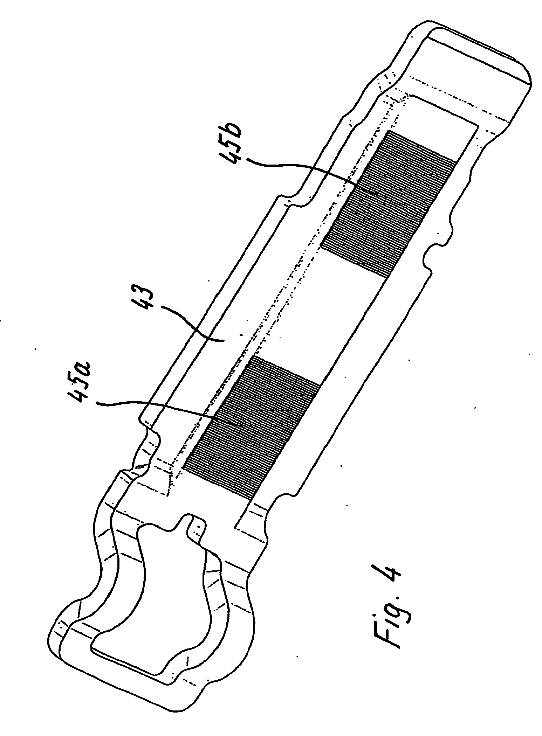

- Figur 4: eine perspektivische Ansicht eines Belaghaltebügels;

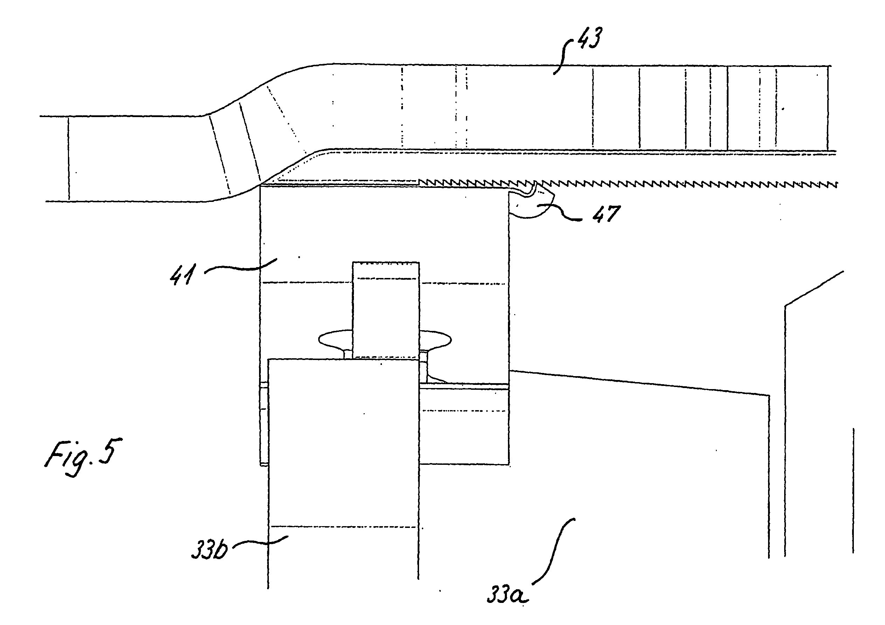

- Figur 5: eine Ausschnittsansicht einer erfindungsgemäßen Scheibenbremse;
- Figur 6: den oberen Umfangsbereich einer Bremsscheibe sowie der Bremsbeläge nebst Belaghaltebügel und Blockiereinrichtung gemäß eines weiteren Ausführungsbeispiels der Erfindung;
- Figur 7: eine weitere perspektivische Ansicht der Elemente aus Figur 6;
- Figur 8: eine teilweise Sprengansicht der Elemente aus Figur 7;
- Figur 9: eine Seitenansicht der Elemente aus Figur 6;
- Figur 10: eine Ausschnittsvergrößerung aus Figur 6;
- Figur 11, 12: zwei Schnittzeichnungen von Elektromotoren als Antrieb der Nachstellvorrichtungen von weiteren Ausführungsbeispielen der Erfindung.

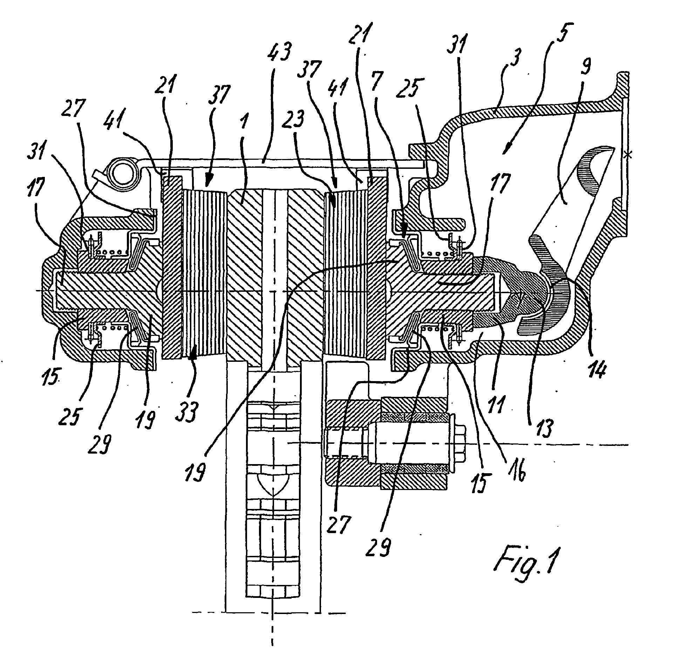

Zunächst sei der prinzipielle Aufbau der Scheibenbremse nach Fig. 1 beschrieben, um beispielhaft den Aufbau einer Scheibenbremse mit elektromagnetisch betätigten Nachstellvorrichtungen auf beiden Stirnseiten der Bremsscheibe zu erläutern.

Fig. 1 zeigt einen Schnitt durch eine Schiebesattel-Scheibenbremse mit einem hier einteiligen, eine Bremsscheibe 1 übergreifenden Bremssattel 3. Alternativ kann die Erfindung auch bei Festsattelscheibenbremsen oder bei Schwenksattelscheibenbremsen eingesetzt werden. Erfindungsgemäß ist die Bremse pneumatisch betätigt. (mit einem pneumatisch betätigten Zylinder),

Alternativ kann der Bremssattel 3 auch zweiteilig ausgebildet sein (hier nicht dargestellt), wobei die beiden Bremssattelteile dann vorzugsweise mittels Schraubbolzen miteinander verbunden werden und wobei vorzugsweise eines der beiden Bremssattelteile rahmenartig die Bremsscheibe in ihrem oberen Umfangsbereich einfasst und das weitere Bremssattelteil zur Aufnahme einer Zuspannvorrichtung dient, was eine einfache Anpassung der Bremse an Zuspannvorrichtungen verschiedenster Bauart ermöglicht.

Auf der einen Seite der Bremsscheibe 1 ist im Bremssattel 3 eine Zuspannvorrichtung 5 angeordnet, welche durch eine zur Bremsscheibe hin weisende Öffnung 7 des Bremssattels 3 in diesen einsetzbar ist (auch ganz oder teilweise vormontiert).

Die Zuspannvorrichtung 5 weist einen von einer (hier nicht dargestellten) Kolbenstange betätigbaren Drehhebel 9 auf, welcher über hier nicht erkennbare Lagerelemente wie Kugeln und zusätzliche Lagerschalen am Bremssattel 3 abgestützt ist.

Der Drehhebel 9 wirkt an seiner vom Bremssattel 3 abgewandten Seite an einer mittigen Stelle oder vorzugsweise an zwei seitlichen Enden jeweils auf ein Zwischenelement 11 ein, welches an seinem dem Drehhebel zugewandten Ende einen halbkugelartigen Ansatz 13 aufweist. Zwischen dem Ansatz 13 und dem Drehhebel 9 ist hier eine Gleitlagerschale 14 angeordnet.

Das Zwischenelement 11 stützt sich an der Stirnseite einer Nachstellmutter 15 ab, in die eine Stellspindel 17 eingesetzt, insbesondere eingeschraubt ist, die an ihrem vom Drehhebel 1 abgewandten Ende ein Druckstück 19 trägt, welche an einer Belaghalteplatte 21 eines zuspannseitigen Bremsbelages 23 anliegt.

Wird der Drehhebel 9 durch Vorschieben der Kolbenstange verschwenkt, bewirkt das untere exzenterartige Ende (hier nicht zu erkennen) des Drehhebels 9 ein Vorschieben des Zwischenelementes 11 in Richtung der Bremsscheibe 1. Dabei werden die Nachstellmutter 15 und die Stellspindel 17 mit in Richtung des Bremsbelages 23 gedrückt und der zuspannseitige Bremsbelag 23 in Richtung der Bremsscheibe 1 verschoben.

Die Nachstellmutter 15 und die Stellspindel 17 sind in zwei Halteplatten 25, 27 eingesetzt. Eine faltenbalgartige Dichtung 29 dichtet den Raum zwischen der einen Halteplatte 25 und dem Druckstück gegen ein Eindringen von Schmutz und Feuchtigkeit ab.

Auf der Nachstellmutter ist ein Zahnrad 31 relativ zur Nachstellmutter unverdrehbar befestigt. Das Zahnrad kann über weitere Getriebeglieder wie weitere Zahnräder insbesondere von einem hier nicht dargestellten Elektromotor betätigt werden, um den durch Bremsungen verursachten Bremsbelagverschleiß auszugleichen.

Wird die Nachstellmutter 15 verdreht, wird die Stellspindel 17 relativ zur Nachstellmutter 15 axial bewegt und damit das Lüftspiel zwischen Bremsbelag und Bremsscheibe verändert. Alternativ ist auch eine Betätigung über eine zwischen Drehhebel 9 und Nachstellmutter 15 geschaltete Koppelmechanik denkbar (hier nicht dargestellt) Bevorzugt sind zwei der Nachstelldreheinrichtungen 16 aus Nachstellmutter 15 und Stellspindel 17 auf jeder Seite der Zuspannvorrichtung 5 nebeneinander angeordnet, so dass der Bremsbelag an zwei Stellen mit Druck beaufschlagt wird.

Zwei weitere Nachstelldreheinrichtungen 16 mit einem vorzugsweise eigenen elektromotorischen Antrieb sind auf der von der Zuspannvorrichtung abgewandten Seite der Bremsscheibe 1- der Reaktionsseite - im Bremssattel 3 angeordnet. Auch diese Nachstelldreheinrichtungen 16 weisen jeweils eine Nachstellmutter 15 und eine Stellspindel 17 auf, die es ermöglichen, das Druckstück 19 in Richtung des auf der Reaktionsseite der Bremsscheibe 1 angeordneten Bremsbelages 33 in Richtung der Bremsscheibe 1 zu verschieben.

Die Einstellung des Lüftspieles erfolgt vorzugsweise rechnergesteuert.

Da auf jeder Stirnseite der Bremsscheibe 1 jeweils wenigstens eine eigene Nachstellvorrichtung - hier jeweils bestehend aus zwei Nachstelldreheinrichtungen mit elektromotorischem Antrieb - angeordnet ist, ist es möglich, den Bremssattel 3' hier als einen Schiebe oder Schwenksattel auszubilden, dessen Schiebeweg oder Schwenkwinkel derart bemessen ist, dass mit ihm weniger als der maximale Nachstellweg, insbesondere sogar lediglich der maximale Arbeitshub beim Zuspannen der Bremse überbrückbar ist.

Zu diesem Zweck ist der Bremssattel 3 an einer Radachse oder -nabe relativ zu dieser an einem elastischen Lager verschwenk oder verschiebbar befestigt. Ergänzend kann auch die Bremsscheibe 1 verschieblich an der Radachse oder -nabe befestigt sein. Da der zu überbrückende Verschiebeweg oder Verschwenkwinkel kleiner als der Verschiebeweg oder der Verschwenkwinkel ist, den ein vergleichbarer Bremssattel nach dem Stand der Technik überbrücken mußte, bei dem nur auf einer Seite der Bremsscheibe 1 eine Nachstellvorrichtung angeordnet war, ergibt sich die überraschende Möglichkeit dazu, die Verschiebbarkeit oder die Verschwenkbarkeit durch eine elastische Anbindung zwischen dem Bremssattel und der Radnabe oder -achse zu realisieren.

Das elastische Lager ist hier parallel zur Bremsscheiben-Symmetrieachse angeordnet, d.h. es findet im wesentlichen keine Schwenkbewegung um eine Lagerdrehachse statt, sondern eine elastische Längsverschiebbarkeit des Sattels mit einer elastischen Schwenkbarkeit quer zur Längsachse der hier z.B. als Lager einsetzbaren Ultrabuchse. Hierbei wird die Bewegung des Bremssattels zum Ausgleich der Elastizität nicht ausschließlich als Schwenkbewegung ausgeführt, wodurch insbesondere Anpassungsbremsungen mit nahezu reiner Längsverschiebung des Bremssattels ausgeführt werden und nur die selten auftretenden Bremsungen mit hohen Bremskräften das Verschwenken des Bremssattels erfordern. Alternativ können auch zwei Lager mit Schwenkachsen parallel zur Scheibendrehachse vorgesehen sein (hier nicht dargestellt).

Wesentlich ist hier, dass die Nachstellvorrichtungen elektromotorisch angetrieben werden, z.B. durch Elektromotore zwischen zwei Drehspindeln auf jeder Seite der Bremsscheibe oder außerhalb des Bremssattels, welche über eine nicht dargestellte Antriebsverbindung mit den Drehantrieben verbunden sind.

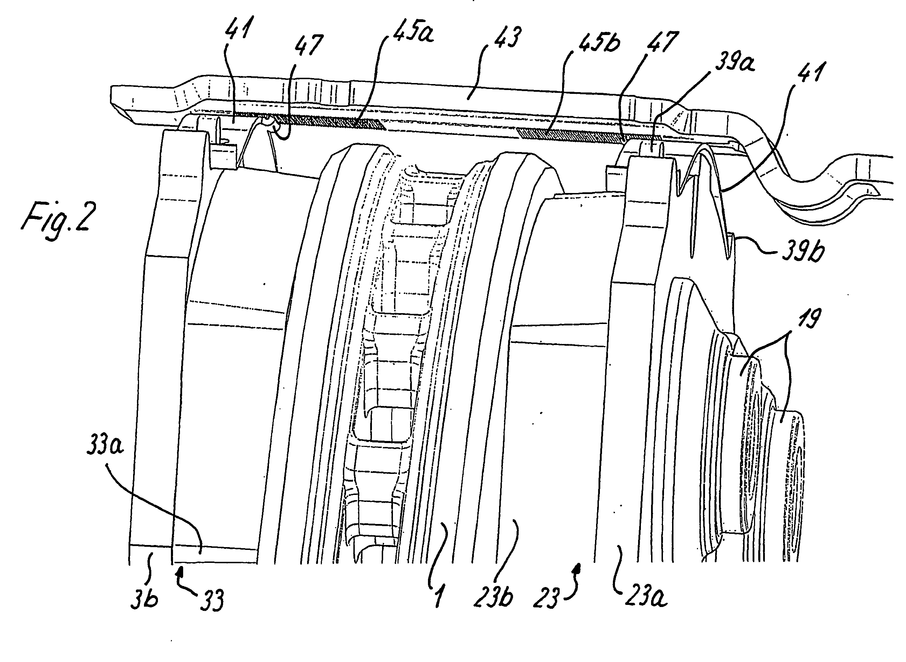

Fig. 2 zeigt den oberen Umfangsbereich der Bremsscheibe 1 nebst den beidseitig der Bremsscheibe 1 angeordneten Bremsbelägen 23, 33, welche jeweils aus Bremsbelagmaterial 23a, 33a und Belaghalteplatte 23b, 33b bestehen, wobei auf die Belaghalteplatten 23b, 33b jeweils zwei Druckstücke 19 auf beiden Seiten der Bremsscheibe 1 einwirken.

Die Bremsbeläge werden in der Einbaustellung der Fig. 1 von oben her in Belagschächte 37 der Scheibenbremse eingeschoben. An ihrem entsprechenden oberen Rand weisen die Belaghalteplatten zwei Haltevorsprünge 39a,b zum Anbringen einer Belaghaltefeder 41 auf, wobei die Belaghaltefedern 41 auf beiden Seiten der Bremsscheibe 1 durch einen senkrecht zur Bremsscheibenebene ausgerichtete Belaghaltebügel 43 gegen ein Ausfallen aus der Bremssattelöffnung zum Einschieben der Beläge gesichert sind (siehe zur prinzipiellen Funktion der Elemente 39 bis 41 auch die EP 0 534 987 B1).

Der am Bremssattel angeordnete, z.B. gelagerte oder befestigte Belaghaltebügel 43 ist an seiner in Einbaustellung unteren Seite mit einer sägezahnartigen Profilierung 45 versehen, welche zwei sägezahnartige Profilierungsabschnitte 45a, b umfasst, welche gegensinnig zueinander ausgerichtet sind. In die Profilierung 45 fassen Vorsprünge 47 der Belaghaltefedern 41 ein, so dass zwar ein Verschieben der Bremsbeläge mit dem Sägezahnprofil, nicht aber gegen das Sägezahnprofil möglich ist. Die Kombination aus Sägezahnprofilierungen 45 und den Vorsprüngen 47 bildet damit die mechanisch wirkende Einrichtung zum Blockieren der elektromotorisch angetriebenen Nachstellstellvorrichtungen gegen ein unbeabsichtigtes Vergrößern des Lüftspieles durch den elektromotorischen Antrieb aus.

Der Belaghaltebügel 43 ist an seiner den Bremsbelägen 23, 33 zugewandten Fläche in den Bereichen, in denen sich die Belaghaltefedern 41 gegen den Belaghaltebügel 43 abstützen, mit der Profilierung 45 versehen.

Die Belaghaltefedern 41 weisen im Kontaktbereich zum Belaghaltebügel 43 die Vorsprünge 47 oder zu den Profilierungen im Belaghaltebügel entgegengesetzte Profilierungen auf, so daß diese Profilierungen unter der Vorspannkraft der Belaghaltefedern ineinandergedrückt werden (hier nicht dargestellt). Die Profilierungen sind dabei so gestaltet, daß ein Verschieben der Bremsbeläge 23, 33 in Richtung Bremsscheibe 1 mit relativ geringer Kraft möglich ist, wohingegen ein Wegbewegen der Bremsbeläge 23 von der Bremsscheibe 1 jedoch durch die ineinandergreifenden Profilierungen 45 von Belaghaltebügel und Belaghaltefedern verhindert wird (nicht dargestellt). (Kabelbinderprinzip).

Eine geringfügige Bewegung der Bremsbeläge 23, 33 von der Bremsscheibe 1 weg wird vorzugsweise dadurch ermöglicht, daß die Belaghaltefedern 41 auf den Bremsbelägen 23, 33 mit einem bestimmten Axialspiel aufgenommen sind.

Diese Variante der Erfindung ist besonders preiswert realisierbar, aber dennoch funktionssicher.

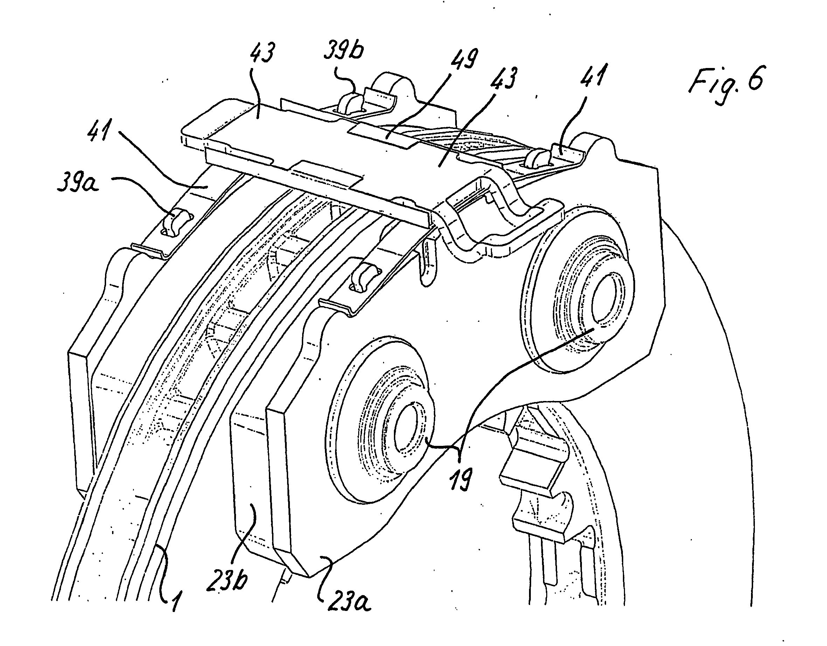

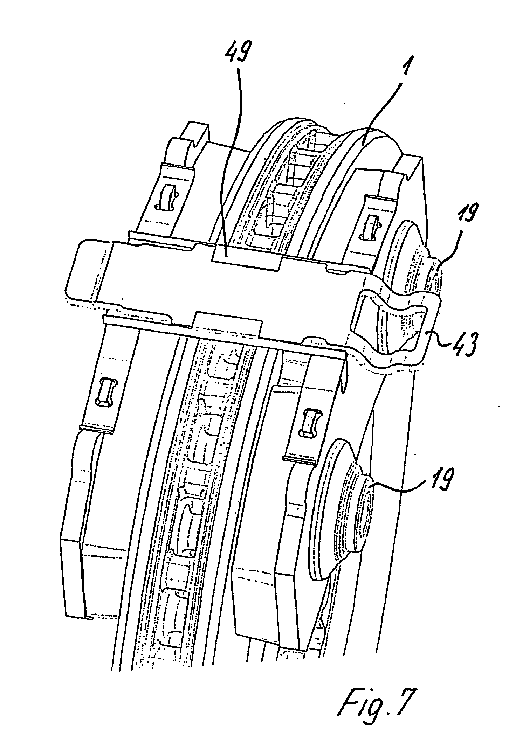

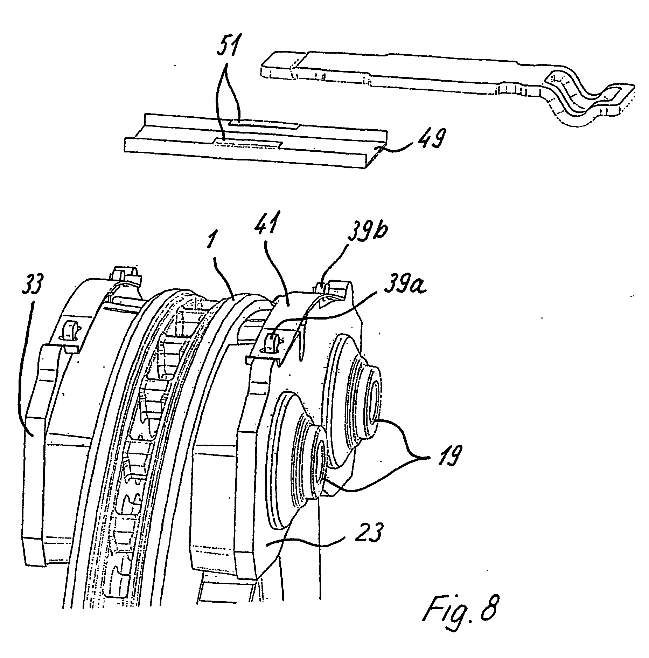

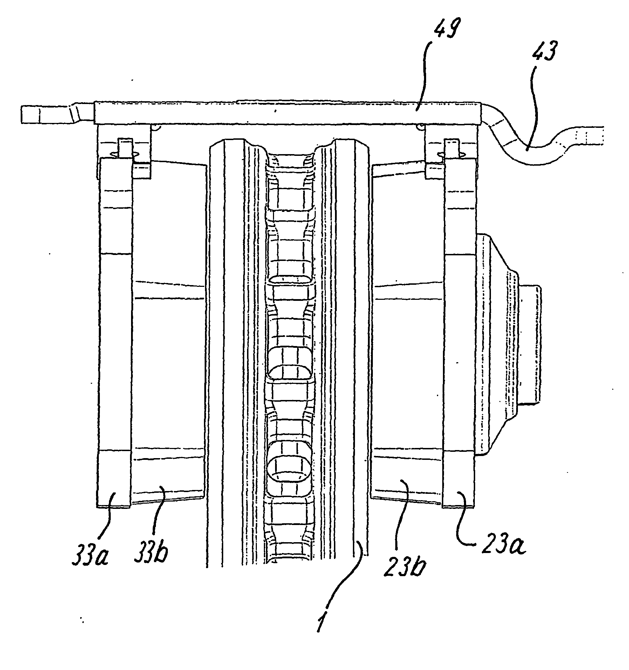

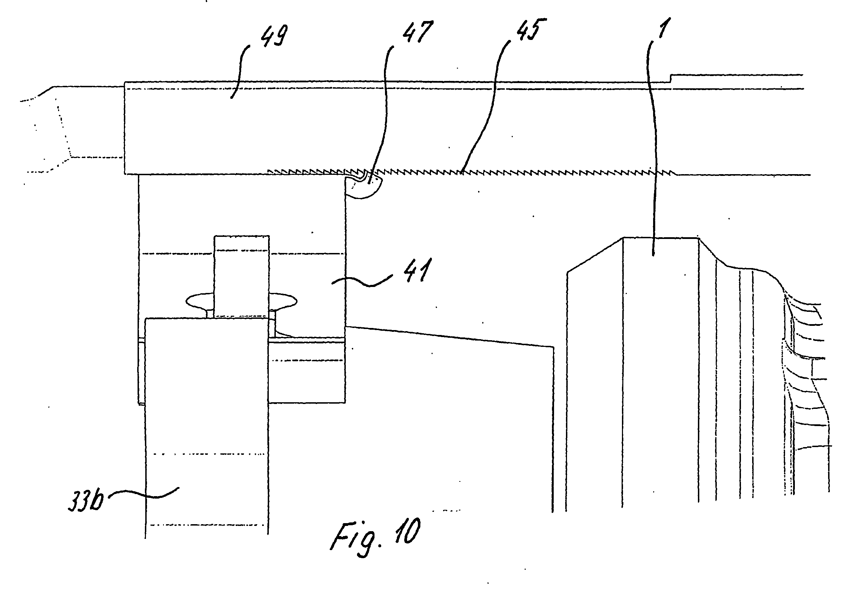

Nach Fig. 6 bis 10 ist die Profilierung 45 nicht im Belaghaltebügel 43 selbst sondern in einem zwischen diesem und den Belaghaltefedern 41 angeordneten Bauteil 49 in Form eines den Belaghaltebügel 43 einfassenden, im Schnitt u-förmigen Metallstreifens angebracht, welcher den Belaghaltebügel 43 an seiner in Einbaustellung unteren Seite sowie seitlich und abschnittsweise mit zwei Haltenasen 51 auch an der Oberseite umgreift. In diesem Fall kann der Belaghaltebügel 43 fest am Bremssattel 3 montiert sein und die axiale Verschiebebewegung findet zwischen diesem Zusatzbauteil 49 und dem Belaghaltebügel 43 statt.

Beim Bremsbelagwechsel wird die Rückdrehblockade durch das Lösen des Belaghaltebügels wieder aufgehoben, der beim Wechsel sowieso zu lösen ist. Bei anderen Realisierungen der Rückdrehsicherung ist eine entsprechende manuelle Lösemechanik zum Lösen der Blockade vorzusehen.

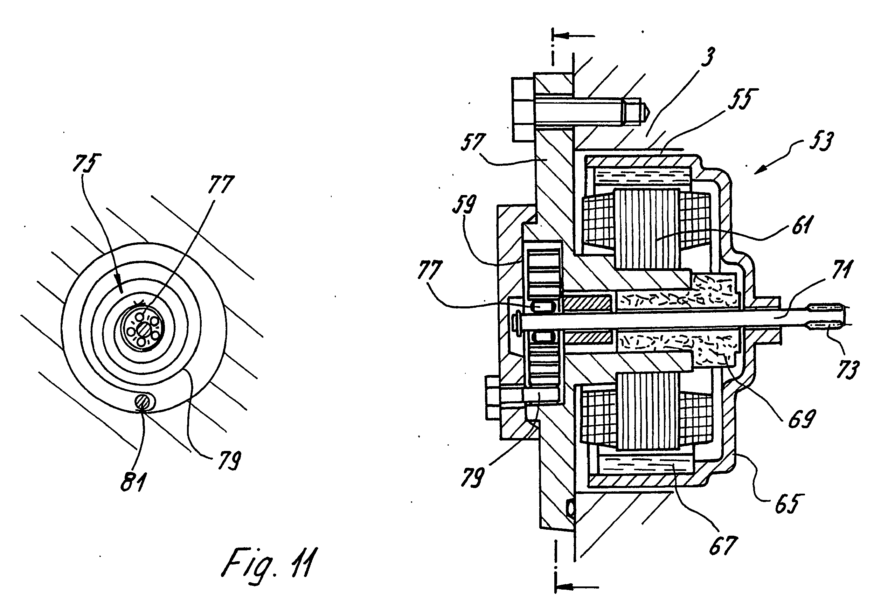

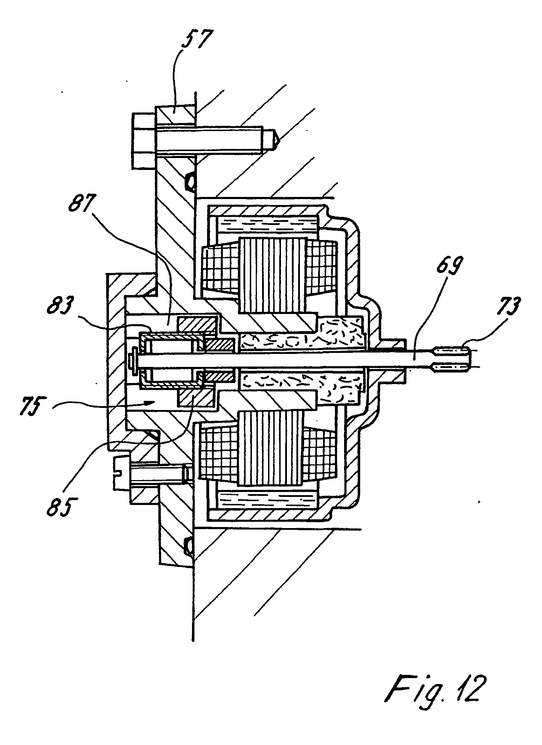

Figur 11 und 12 zeigen Beispiele zur Realisierung der Einrichtung zum Blockieren der elektromotorisch angetriebenen Nachstellvorrichtung durch eine mechanische Rückdrehblockade am elektromotorischen Antrieb, insbesondere an einem Antriebsmotor 53.

Dargestellt sind jeweils EC-Motoren, welche in Ausnehmungen 55 eines Bremsengehäuses bzw. Bremssattels 3 angeordnet sind, wobei die Ausnehmungen 55 durch Lagerschild 57 und Deckel 59 nach außen hin verschlossen sind.

Der EC-Motor weist den Stator 61 mit Magnetspulen 63 sowie einen Rotor 65 mit Dauermagnet 67 sowie ein Gleitlager 69 auf, in dem eine Welle 71 mit Antriebsritzel 73 zum Antrieb der im übrigen nachgeschalteten Nachstellvorrichtung, beispielsweise nach Art der Figur 1 angeordnet ist.

Zur Realisierung der mechanischen Rückdrehblockade 75 ist an dem vom Antriebsritzel 73 abgewandten Ende der Welle 69 dieselbe von einem Klemmrollenfreilauf 77 umgeben, der am inneren Ende einer Spirale bzw. Spiralfeder 79 angeordnet ist, welche mit einem Spanstift am äußeren Ende am Lagerschild 57 befestigt ist.

Damit ist auf einfache Weise der Weg des Rückdrehens der Welle 69 und damit auch der Weg des Rückstellens der Nachstellvorrichtungen beschränkt.

Figur 12 unterscheidet sich von Figur 11 dadurch, daß auf einem Ende eines Freilaufgehäuses 83 des Klemmrollenfreilaufs 77 ein Außengewinde angeordnet ist, welches mit dem Innengewinde einer Sechskantmutter 85 kämmt, welche auf dem Gewinde 83 unverdrehbar aber axial verschiebbar angeordnet ist, da sie in einem entsprechenden Innengewinde in einer Ausnehmung 87 des Lagerschildes 57 angeordnet ist.

Da hier der Verschiebeweg der Sechskantmutter durch den Freilauf in Kombination mit den Abmessungen der Ausnehmung 87 im Lagerschild 57 begrenzt ist, wird auch hier auf einfache Weise eine mechanische Rückdrehblockade 75 verwirklicht.

### Bezugszeichen

- Bremsscheibe: 1
- Bremssattel: 3
- Zuspannvorrichtung: 5
- Öffnung: 7
- Drehhebel: 9
- Zwischenelement: 11
- halbkugelartiger Ansatz: 13
- Gleitlagerschale: 14
- Nachstellmutter: 15
- Nachstelldreheinrichtung: 16
- Stellspindel: 17
- Druckstück: 19
- Belaghalteplatte: 21
- Bremsbelag: 23
- Bremsbelagmaterial: 23a, 33a
- Belaghalteplatte: 23b, 33b
- Halteplatten: 25, 27
- Dichtung: 29
- Zahnrad: 31
- Bremsbelag: 33
- Lager: 35
- Belagschächte: 37
- Haltevorsprünge: 39a,b
- Belaghaltefedern: 41
- Belaghaltebügel: 43
- Profilierungen: 45
- Vorsprünge: 47
- Bauteil: 49

- Haltenasen: 51
- Antriebsmotor: 53
- Ausnehmung: 55
- Lagerschild: 57
- Deckel: 59
- Stator: 61
- Magnetspule: 63
- Rotor: 65
- Dauermagnet: 67
- Gleitkörper: 69
- Welle: 71
- Antriebsritzel: 73
- Rückdrehblockade: 75
- Spiralfeder: 79
- Gewinde: 83
- Mutter: 85
- Ausnehmung: 87

## Patentansprüche

1. Scheibenbremse, insbesondere für Nutzfahrzeuge, mit
a) einem eine Bremsscheibe (1) übergreifenden Bremssattel (3),
b) einer im Bremssattel (3) angeordneten pneumatisch betätigbaren Zuspanneinrichtung (5) zum Zuspannen der Bremse;
c) wenigstens eine Nachstellvorrichtung mit elektromotorischem Antrieb zum Ausgleich von Bremsbelagverschleiß durch Nachstellen des Lüftspieles der Scheibenbremse; insbesondere mit wenigstens einer elektromotorisch angetriebenen Nachstell-Dreheinrichtung (16) auf jeder Seite der Bremsscheibe, wobei jede Nachstell-Dreheinrichtung (16) jeweils über wenigstens ein Druckstück (19) auf Bremsbeläge (23, 33) beidseits der Bremsscheibe (1) einwirkt,
**gekennzeichnet durch**
d) eine mechanisch wirkende Einrichtung (45, 47) zum Blockieren der elektromotorisch angetriebenen Nachstellstellvorrichtungen gegen ein einen zulässigen Grenzwert überschreitendes Vergrößern des Lüftspieles **durch** den elektromotorischen Antrieb.

2. Scheibenbremse nach Anspruch 1, **dadurch gekennzeichnet, dass** auf beiden Seiten der Bremsscheibe (1) jeweils wenigstens eine Nachstellvorrichtung angeordnet ist, so dass zum Ausgleich von Bremsbelagverschleiß beide Bremsbeläge (23, 33) auf beiden Seiten der Bremsscheibe nachstellbar sind.

3. Scheibenbremse nach Anspruch 1 oder 2, **dadurch gekennzeichnet dass** jede Nachstellvorrichtung jeweils wenigstens eine oder zwei Nachstelldreheinrichtungen (16) aufweist.

4. Scheibenbremse nach einem der vorstehenden Ansprüche, **dadurch gekennzeichnet, daß** die Blockierkräfte zumindest so groß bemessen sind, daß der elektromotorische Antrieb der Nachstellvorrichtung die Blockierkräfte nicht überwinden kann und gegen das maximale Antriebsmoment im Stillstand gehalten wird.

5. Scheibenbremse nach einem der vorstehenden Ansprüche, **gekennzeichnet durch** eine ergänzende elektronisch wirkende Einrichtung zum Blockieren der elektromotorisch angetriebenen Nachstellstellvorrichtung(en) gegen ein unbeabsichtigtes Vergrößern des Lüftspieles **durch** den elektromotorischen Antrieb.

6. Scheibenbremse nach einem der vorstehenden Ansprüche, **dadurch gekennzeichnet, daß** die Einrichtung zum Blockieren der elektromotorisch angetriebenen Nachstellvorrichtung durch eine mechanische Rückdrehblo kade am elektromotorischem Antrieb, insbesondere an einem Antriebsmotor (53), an einem Getriebe oder an den Nachstelldreheinrichtungen (16) realisiert ist.

7. Scheibenbremse nach Anspruch 6, **dadurch gekennzeichnet, daß** die mechanische Rückdrehblockade an den Nachstelldreheinrichtungen (16) ausgebildet ist.

8. Scheibenbremse nach einem der vorstehenden Ansprüche, **dadurch gekennzeichnet, daß** die Nachstelldreheinrichtungen (16) mit den Bremsbelägen zur Übertragung von Rückziehkräften verbunden werden und die Bremsbeläge (23, 33) so miteinander gekoppelt sind, daß sie zwar beim Auftreten von Verschleiß durch die Nachstellvorrichtung auf beiden Seiten der Bremsscheibe (1) aufeinander zu bewegbar sind, daß ein Auseinanderbewegen der Bremsbeläge (23, 33) jedoch nur über einen vorgegebenen Weg möglich ist.

9. Scheibenbremse nach einem der vorstehenden Ansprüche, **dadurch gekennzeichnet, daß** auf einem Wellenende des wenigstens einen Antriebsmotors (53) ein Freilauf angeordnet ist, der eine Drehbewegung des Antriebsmotors in zustellender Richtung der Nachstelldreheinrichtungen (16) ermöglicht, ein rückdrehender Richtung jedoch sperrt.

10. Scheibenbremse nach einem der vorstehenden Ansprüche, **dadurch gekennzeichnet, daß** das Gehäuse des Freilaufs mit einem elastischen Element, z.B. einer Spiralfeder (79) verbunden ist.

11. Scheibenbremse nach Anspruch 10, **dadurch gekennzeichnet, daß** das äußere Ende der Spiralfeder (79) entkoppelbar mit dem Bremssattel (3) verbunden ist.

12. Scheibenbremse nach einem der Ansprüche 9-11, **gekennzeichnet durch** einen Freilauf mit einem Schraubelement.

13. Scheibenbremse nach einem der vorstehenden Ansprüche, **dadurch gekennzeichnet, daß** die beiden Bremsbeläge (23, 33) durch eine Kopplungseinrichtung derart miteinander gekoppelt sind, daß sie zum Zwecke der Verschleißnachstellung aufeinander zu, nicht jedoch voneinander weg bewegbar sind.

14. Scheibenbremse nach Anspruch 13, **dadurch gekennzeichnet, daß** die Kopplungseinrichtung an einem Belaghaltebügel (43) ausgebildet ist, der sich rechtwinklig zu den Reibflächen der Bremsscheibe (1) über diese und die Bremsbeläge (23,33) hinweg erstreckt und an beiden Enden am Bremssattel (3) abgestützt ist, wobei der Belaghaltebügel (43) die beiden Bremsbeläge (23, 33) über eine auf diese aufgesetzte Belaghaltefeder (41) gegen Abstützflächen in der Bremsbelagführung des Bremsensattels (8) drückt.

15. Scheibenbremse nach Anspruch 14, **dadurch gekennzeichnet, daß** der Belaghaltbügel (63) in Widerlagern am Bremssattel (3) axial beweglich aufgenommen ist.

16. Scheibenbremse nach einem der Ansprüche 14 oder 15, **dadurch gekennzeichnet, daß** der Belaghaltebügel (43) an seiner den Bremsbelägen (23,33) zugewandten Fläche in den Bereichen, in welchen sich die Belaghaltefedern (41) gegen die Belaghaltebügel (43) abstützen, mit einer Profilierung (45), insbesondere mit einem Sägezahnprofil, versehen ist.

17. Scheibenbremse nach Anspruch 16, **dadurch gekennzeichnet, daß** die Profilierung 45 zwei gegensinnig ausgerichtete Profilierungsabschnitte (45a, 45b) aufweist, so daß ein Verschieben der Bremsbeläge (23, 33) in Richtung der Bremsscheibe (1) mit relativ geringer Kraft möglich ist, wohingegen ein Wegbewegen der Bremsbeläge (23) von der Bremsscheibe (1) durch die Profilierungen nur mit größerer Kraft möglich ist.

18. Scheibenbremse nach einem der Ansprüche 16 oder 17, **dadurch gekennzeichnet, daß** an den Belaghaltefedern (41) Vorsprünge ausgebildet sind, welche in die Profilierung (45) eingreifen.

19. Scheibenbremse nach einem der Ansprüche 16-18, **dadurch gekennzeichnet, daß** die Belaghaltefeder (41) auf den Bremsbelägen (23, 33) mit einem Axialspiel aufgenommen sind.

20. Scheibenbremse nach einem der Ansprüche 17-19 d**adurch** gekennzeichnet, daß die Profilierungsabschnitte (45a,45b) in einem zwischen Belaghaltebügel (43) und den Belaghaltefedern (41) angeordneten Bauteil (49) angeordnet sind, wobei das Bauteil (49) relativ zum Belaghaltebügel (43) verschieblich ist.

21. Scheibenbremse nach einem der vorstehenden Ansprüche, **dadurch gekennzeichnet, daß** Druckstücke (19) mit Belaghalteplatten (23a, 33a) verbunden sind.

## Claims

1. Disc brake, particularly for commercial vehicles, comprising
(a) a brake calliper (3) overlapping a brake disc (1),
(b) a pneumatically operable brake application means (5) disposed in said brake calliper (3) for applying the brake;
(c) at least one adjusting device with an electromotive drive system for compensation of wear on the brake lining by adjusting the air clearance of the disc brake; in particular with at least one adjusting rotating means (16) operated by a motor on either side of the brake disc, with each adjusting rotating means (16) acting upon the brake linings (23, 33) on either side of said brake disc (1) via at least one respective pressure element,
**characterised by**
(d) a mechanically operating means (45, 47) for blocking said adjusting devices operated by a motor to prevent the devices from enlarging the air clearance in excess of an admissible limit value by said electromotive drive system.

2. Disc brake according to Claim 1, **characterised in that** at least one respective adjusting device is disposed on both sides of said brake disc (1) so that both brake linings (23, 33) on both sides of said brake disc can be adjusted for compensation of wear on the brake lining.

3. Disc brake according to Claim 1 or 2, **characterised in that** each adjusting device comprises at least one or two adjusting rotating means (16).

4. Disc brake according to any of the preceding Claims, **characterised in that** the blocking forces are dimensioned to be at least of such a magnitude that the electromotive drive system of said adjusting device cannot overcome the blocking forces and is maintained in opposition to the maximum driving momentum in inoperative state.

5. Disc brake according to any of the preceding Claims, **characterised by** a supplementing, electronically operative means for blocking said adjusting device(s) driven by electromotive force in opposition to unintentional enlargement of the air clearance by said electromotive drive system.

6. Disc brake according to any of the preceding Claims, **characterised in that** said means for blocking said adjusting device driven by electromotive force is realised by a mechanical blocking means preventing counter-torque on said electromotive drive system, in particular a driving motor (53), on a gear system or on said adjusting rotating means (16).

7. Disc brake according to Claim 6, **characterised in that** said mechanical blocking means preventing counter-torque is formed on said adjusting rotating means (16).

8. Disc brake according to any of the preceding Claims, **characterised in that** said adjusting rotating means (16) are connected to said brake linings for transmission of retractile forces and that said brake linings (23, 33) are coupled to each other in such a way that even though they can be moved towards each other by said adjusting device on both sides of said brake disc (1) when wear occurs, a movement of said brake linings (23, 33) apart from each other is possible only along a predetermined path.

9. Disc brake according to any of the preceding Claims, **characterised in that** on one shaft end of said at least one driving motor (53), an overrunning component is disposed that permits a rotating movement of said driving motor along the direction of application of said adjusting rotating means (16) whilst it blocks a counter-rotating movement in the opposite direction.

10. Disc according to any of the preceding Claims, **characterised in that** the housing of said overrunning component is connected to a resilient element such as a spiral spring (79).

11. Disc brake according to Claim 10, **characterised in that** the outer end of said spiral spring (79) is connected to said brake calliper (3) for being uncoupled.

12. Disc brake according to any of the Claims 9 to 11, **characterised by** an overrunning component including a screwing element.

13. Disc brake according to any of the preceding Claims, **characterised in that** said two brake linings (23, 33) are coupled to each other by means of a coupling means in such a manner that they can be moved towards each other for adjustment for wear compensation but that they cannot be moved apart from each other.

14. Disc brake according to Claim 13, **characterised in that** said coupling means are formed on a lining-holding bracket (43) that extends at a right angle relative to the friction surfaces of said brake disc (1) beyond the latter and beyond said brake linings (23, 33) and is supported on said brake calliper 83) on both ends, with said lining-holding bracket (43) pressing said two brake linings (23, 33) via a lining-holding spring (41) placed on said brake linings, against supporting surfaces in the brake lining guide of said brake calliper (3)

15. Disc brake according to Claim 14, **characterised in that** said lining-holding bracket (63) is received in abutments on said brake calliper (3) for axial movement.

16. Disc brake according to any of the Claims 14 or 15, **characterised in that** said lining-holding bracket (43) is provided with a profile (45), particularly a saw-tooth profile, on its surface facing said brake linings (23, 33) in those areas where said lining-holding springs (41) are supported against said lining-holding brackets (43).

17. Disc brake according to Claim 16, **characterised in that** said profile (45) includes two profile sections (45a, 45b) oriented in opposite directions so that displacement of said brake linings (23, 33) along a direction towards said brake disc (1) is possible at a comparatively weak force whereas a movement of said brake linings (23) away from said brake disc (1), which is induced by said profiles, is possible only with a stronger force.

18. Disc brake according to any of the Claims 16 or 17, **characterised in that** projections are formed on said lining-holding springs (41), which engage into said profile (45).

19. Disc brake according to any of the Claims 16 to 18, **characterised in that** said lining-holding springs (41) are received on said brake linings (23, 33) with an axial clearance.

20. Disc brake according to any of the Claims 17 to 19, **characterised in that** said profile sections (45a, 45b) are disposed in a component (49) arranged between said lining-holding bracket (43) and said lining-holding springs (41), with said component (49) being adapted for displacement relative to said lining-holding bracket (43).

21. Disc brake according to any of the preceding Claims, **characterised in that** pressure elements (19) are connected to lining-holding plates (23a, 33a).

## Revendications

1. Frein à disque notamment pour véhicule utilitaire comprenant
a) un étrier (3) de frein enjambant un disque (1) de frein,
b) un dispositif (5) de serrage, disposé dans l'étrier (3) de frein et pouvant être actionné par voie pneumatique pour serrer le frein,
c) au moins un dispositif de réglage à entraînement par moteur électrique pour compenser l'usure de la garniture de frein par réglage du jeu du frein à disque ; comprenant notamment au moins un dispositif (16) de rotation de réglage entraîné par un moteur électrique de chaque côté du frein à disque, chaque dispositif (16) de rotation de réglage agissant respectivement par au moins une pièce (19) d'application d'une pression sur des garnitures (28, 33) de frein de part et d'autre du disque (1) de frein,
**caractérisé par**
d) un dispositif (45, 47) agissant mécaniquement pour bloquer les dispositifs de réglage entraînés par un moteur électrique vis-à-vis d'un agrandissement dépassant une valeur limite admissible du jeu par l'entraînement par moteur électrique.

2. Frein à disque suivant la revendication 1, **caractérisé en ce qu'**il est disposé des deux côtés du disque (1) de frein, respectivement au moins un dispositif de réglage de manière à ce que, pour compenser de l'usure de garniture de frein, les deux garnitures (23, 33) de frein puissent être réglées des deux côtés du disque de frein.

3. Frein à disque suivant la revendication 1 ou 2, **caractérisé en ce que** chaque dispositif de réglage a respectivement au moins un ou deux dispositifs (16) de rotation de réglage.

4. Frein à disque suivant l'une des revendications précédentes, **caractérisé en ce que** les forces de blocage sont au moins si grandes que l'entraînement par moteur électrique du dispositif de réglage ne peut surmonter les forces de blocage et est maintenu à l'état de repos à l'encontre du couple d'entraînement maximum.

5. Frein à disque suivant l'une des revendications précédentes, **caractérisé par** un dispositif complémentaire, agissant électroniquement pour bloquer le ou les dispositifs de réglage entraînés par un moteur électrique vis-à-vis d'un agrandissement intempestif du jeu par l'entraînement par moteur électrique.

6. Frein à disque suivant l'une des revendications précédentes, **caractérisé en ce que** le dispositif de blocage du dispositif de réglage entraîné par moteur électrique est réalisé par un blocage mécanique de rotation en retour sur le dispositif d'entraînement par moteur électrique, notamment sur un moteur (53) d'entraînement, sur une transmission ou sur des dispositifs (16) de rotation de réglage.

7. Frein à disque suivant la revendication 6, **caractérisé en ce que** le blocage mécanique de rotation en retour est réalisé sur les dispositifs (16) de rotation de réglage.

8. Frein à disque suivant l'une des revendications précédentes, **caractérisé en ce que** les dispositifs (16) de rotation de réglage sont reliés aux garnitures de frein pour la transmission de forces de traction en retour et les garnitures (23, 33) de frein sont couplées entre elles de façon à pouvoir certes lorsque apparaît de l'usure être rapprochées par le dispositif de réglage l'une de l'autre des deux côtés du disque (1) de frein, mais de façon à ce qu'un éloignement des garnitures (23, 33) de frein ne soit possible que sur un trajet prescrit.

9. Frein à disque suivant l'une des revendications précédentes, **caractérisé en ce qu'**il est monté sur un bout d'arbre du au moins un moteur (58) d'entraînement, une roue libre qui permet un mouvement de rotation du moteur d'entraînement dans le sens d'avance des dispositifs (16) de rotation de réglage, mais bloque dans le sens inverse.

10. Frein à disque suivant l'une des revendications précédentes, **caractérisé en ce que** le boîtier de la roue libre est relié à un élément élastique, par exemple à un ressort (79) spirale.

11. Frein à disque suivant la revendication 10, **caractérisé en ce que** l'extrémité extérieure du ressort (79) spirale est reliée de manière découplable à l'étrier (3) de frein.

12. Frein à disque suivant l'une des revendications 9 à 11, **caractérisé par** une roue libre ayant un élément à vis.

13. Frein à disque suivant l'une des revendications précédentes **caractérisé en ce que** les deux garnitures (23, 33) de frein sont couplées entre elles par un dispositif d'accouplement de façon à ce qu'à des fins de réglage en cas d'usure, elles puissent être rapprochées mais non éloignées l'une de l'autre.

14. Frein à disque suivant la revendication 13, **caractérisé en ce que** le dispositif d'accouplement est constitué sur une fourchette (43) de maintien de garniture, qui s'étend à angle droit par rapport aux surfaces de friction du disque (1) de frein au-delà de celui-ci et des garnitures (23, 33) de frein et qui s'appuie sur les deux extrémités de l'étrier (3) de frein, la fourchette (43) de maintien de garniture repoussant les deux garnitures (23, 33) de frein par un ressort (41) de maintien de garniture, qui est appliqué sur celle-ci sur des surfaces d'appui du guidage de garniture de frein de l'étrier (3) de frein.

15. Frein à disque suivant la revendication 14, **caractérisé en ce que** la fourchette (63) de maintien de garniture est reçue de manière à être mobile axialement dans des butées sur l'étrier (3) de frein.

16. Frein à disque suivant l'une des revendications 14 ou 15, **caractérisé en ce que** la fourchette (43) de maintien de garniture est munie, sur sa surface tournée vers les garnitures (23, 33) de frein dans les régions dans lesquelles les ressorts (41) de maintien de garniture s'appuient sur la fourchette (43) de maintien de garniture, d'un profilage (45), notamment d'un profil en dents de scie.

17. Frein à disque suivant la revendication 16, **caractérisé en ce que** le profilage (45) a deux parties (45a, 45b) de profilage dirigées en sens opposé de façon à rendre possible, avec une force relativement petite, un déplacement des garnitures (23, 33) de frein en direction du disque (1) de frein tandis qu'un éloignement des garnitures (23) de frein du disque (1) de frein n'est rendue possible par le profilage qu'avec une force plus grande.

18. Frein à disque suivant l'une des revendications 16 ou 17, **caractérisé en ce qu'**il est constitué sur les ressorts (41) de maintien des garnitures des saillies qui pénètrent sur dans le profilage (45).

19. Frein à disque suivant l'une des revendications 16 à 18, **caractérisé en ce que** les ressorts (41) de maintien de garniture sont reçus avec du jeu axial sur les garnitures (23, 33) de frein.

20. Frein à disque suivant l'une des revendications 17 à 19, **caractérisé en ce que** les parties (45a, 45b) de profilage sont disposées dans un élément (49) constitutif disposé entre la fourchette (43) de maintien de garniture et les ressorts (41) de maintien de garniture, l'élément (49) constitutif pouvant coulisser par rapport à la fourchette (43) de maintien de garniture.

21. Frein à disque suivant l'une des revendications précédentes, **caractérisé en ce que** des pièces (19) d'application d'une pression sont reliées à des plaques (23a, 33a) de maintien de garniture.
